# EUROPÄISCHE PATENTSCHRIFT

(11) **EP 3 403 859 B1**
(45) Veröffentlichungstag und Bekanntmachung des Hinweises auf die Patenterteilung: **07.04.2021**
(21) Anmeldenummer: 18171050.0
(22) Anmeldetag: 07.05.2018
(51) Int. Cl.: B60H 1/34, F24F 13/075

(54) **LUFTAUSSTRÖMER**
AIR VENT
DISPOSITIF D'ÉCOULEMENT D'AIR

(30) Priorität: 19.05.2017 DE 102017111011
(43) Veröffentlichungstag der Anmeldung: 21.11.2018
(73) Patentinhaber: Dr. Schneider Kunststoffwerke GmbH, 96317 Kronach-Neuses (DE)
(72) Erfinder: Dominic, Horner, 96317 Kronach (DE); Kraus, Lukas, 96317 Kronach (DE)

(56) Entgegenhaltungen:
- WO-A1-2016/180813
- DE-A1-102010 035 079
- DE-A1-102014 101 315
- DE-A1-102015 205 257
- DE-B3-102013 210 055
- JP-A- 2016 210 219

## Beschreibung

Es wird ein Luftausströmer beschrieben, der zwei erste Luftleitelemente aufweist, die zur Luftablenkung dienen und beabstandet zu einer Luftaustrittsöffnung angeordnet sind. Ein solcher Luftausströmer kann zusätzlich eine Lamellenanordnung mit einer ersten Gruppe von Lamellen und einer zweiten Gruppe von Lamellen aufweisen, wobei über die Lamellenanordnung eine Luftablenkung orthogonal zur Luftablenkung über die ersten Luftleitelemente erreicht werden kann.

### Stand der Technik

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können beispielsweise Kraftfahrzeuge, wie Pkw, Lkw oder Busse, Züge, Flugzeuge oder Schiffe sein. Bei Luftausströmern kann in der Regel neben der Steuerung der Ablenkung von ausgegebener Luft, beispielsweise von einer Klimaanlage, auch die Menge an ausgegebener Luft geregelt werden. Die Menge der zugeführten Luft wird über eine Steuereinrichtung geregelt, die beispielsweise mit einer Bedieneinrichtung zum Verschwenken von Lamellen oder getrennt von einer solchen Bedieneinrichtung neben einer Ausströmöffnung angeordnet ist. Luftausströmer können in einem Fahrzeugarmaturenbrett oder im Bereich der A- oder B-Säule oder am Dach eines Kraftfahrzeugs angeordnet sein.

Luftausströmer in Kraftfahrzeugen weisen oftmals mindestens eine Gruppe von verschwenkbar gelagerten Lamellen auf, die eine Ablenkung der ausgegebenen Luft ermöglichen. Es sind zudem Luftausströmer entwickelt worden, die eine geringe Höhe im Vergleich zu ihrer Breite aufweisen. Bei diesen Luftausströmern ist das Platzangebot zum Verschwenken von Lamellen relativ gering.

Bei solchen Fugenausströmern ist oftmals ein Luftleitelement vorgesehen, das sich über die gesamte Breite erstreckt. Eine Vielzahl von parallel verschwenkbar gelagerten Lamellen ist in Blickrichtung auf den Luftausströmer hinter dem Luftleitelement bzw. in Luftströmungsrichtung vor diesem gelagert.

Ein Luftausströmer mit einem ähnlichen Aufbau ist weiter aus DE 10 2013 210 055 B3 bekannt. Der Luftausströmer weist ein Gehäuse und ein in dem Gehäuse befindliches Luftleitelement mit einer ersten Luftleitfläche und einer der ersten Luftleitfläche gegenüberliegenden und zur ersten Luftleitfläche symmetrischen zweiten Luftleitfläche auf. Durch das Gehäuse und die erste Luftleitfläche wird ein erster Luftkanal gebildet und durch das Gehäuse und die zweite Luftleitfläche wird ein zweiter Luftkanal gebildet, wobei der erste Luftkanal zum Transport eines ersten Volumenstroms von durch die Lufteintrittsöffnung in das Gehäuse einströmender Luft zur Luftaustrittsöffnung ausgebildet ist, und der zweite Luftkanal zum Transport eines zweiten Volumenstroms von der durch die Lufteintrittsöffnung in das Gehäuse einströmbaren Luft zur Luftaustrittsöffnung ausgebildet ist. Zusätzlich weist der Luftausströmer einen ersten Flügel auf, der an dem der Luftaustrittsöffnung zugewandten Ende des Luftleitelements beweglich angeordnet ist, wobei die Beweglichkeit des ersten Flügels so ausgebildet ist, dass aufgrund der Stellung des ersten Flügels das Verhältnis vom ersten Volumenstrom zum zweiten Volumenstrom einstellbar ist.

Der bekannte Luftausströmer weist jedoch den Nachteil auf, dass in den verschiedenen Stellungen des Flügels verschiedene Strömungsgeschwindigkeiten und Drücke erreicht werden. Insbesondere kann beim Absperren des ersten Volumenstroms die Geschwindigkeit des zweiten Volumenstroms übermäßig stark ansteigen. Befindet sich der erste Flügel in einer Mittelstellung, so kann der Volumenstrom über die beiden Luftkanäle eine deutlich geringere Strömungsgeschwindigkeit aufweisen. Insbesondere nimmt der Druckverlust bei den verschiedenen Stellungen des Flügels enorm zu.

Aus DE 10 2010 035 079 A1 ist zusätzlich eine Luftausströmvorrichtung für ein Fahrzeug bekannt, die in einem Strömungskanal angeordnete Luftleitlamellen aufweist, wobei ein Teil der Luftleitlamellen in Luftströmungsrichtung einem vorderen Abschnitt und einer Luftaustrittsöffnung vorgelagert sind, wobei diese Luftleitlamellen den Querschnitt des Strömungskanals verkleinern und die Schwenkachsen der Luftaustrittsöffnung abgewandt sind.

### Aufgabe

Demgegenüber besteht die Aufgabe darin, einen Luftausströmer anzugeben, der eine geringe Bauraumhöhe aufweist, wobei der Druckverlust minimiert wird und die Strömungsgeschwindigkeiten in den verschiedenen Ablenkstellungen von Komponenten des Luftausströmers im Wesentlichen gleichbleiben.

Zudem sollen keine beweglichen Luftleitelemente von außen in Blickrichtung auf den Luftausströmer sichtbar sein.

Ferner weisen die aus dem Stand der Technik bekannten Luftausströmer eine komplexe Kinematik auf. Daher besteht die Aufgabe auch darin einen Luftausströmer anzugeben, der einen einfachen Aufbau aufweist.

### Lösung

Die vorstehend genannte Aufgabe wird durch einen Luftausströmer gelöst, der zwei erste Luftleitelemente aufweist, die in Luftströmungsrichtung einer Luftaustrittsöffnung und einem vorderen Abschnitt eines Luftkanals des Luftausströmers vorgelagert sind, wobei
- die ersten Luftleitelemente so angeordnet sind, dass sie den Querschnitt des Luftkanals verkleinern, und
- die Schwenkachsen der ersten Luftleitelemente durch die der Luftaustrittsöffnung abgewandten Stirnseiten der ersten Luftleitelemente verlaufen,
   dadurch gekennzeichnet, dass der Luftausströmer
- ein zweites Luftleitelement aufweist, welches in dem vorderen Abschnitt des Luftkanals des Luftausströmers angeordnet ist, wobei der vordere Abschnitt gegenüberliegende gekrümmte Gehäusewände aufweist, und
- eine Lamellenanordnung mit einer ersten Gruppe von Lamellen und einer zweiten Gruppe von Lamellen aufweist, wobei die erste Gruppe von Lamellen und die zweite Gruppe von Lamellen jeweils zwischen dem zweiten Luftleitelement und einer gegenüberliegenden Gehäusewand verschwenkbar gelagert sind.

Die ersten Luftleitelemente sind so miteinander bewegungsmäßig gekoppelt, dass diese in den verschiedenen Stellungen den Querschnitt des Luftkanals nicht verkleinern. Zwar sind die ersten Luftleitelemente so angeordnet, dass sie den Querschnitt des Luftkanals in Luftströmungsrichtung verkleinern, jedoch ist der Querschnitt des Luftkanals zwischen den beiden ersten Luftleitelementen in sämtlichen Stellungen der ersten Luftleitelemente gleich groß. Gegenüber bekannten Luftausströmern wird hierbei erreicht, dass es zu keinem Druckverlust und damit nicht zu stark variierenden Strömungsgeschwindigkeiten kommt.

Der vordere Abschnitt ist dabei so ausgebildet, dass die einströmende Luft nach Maßgabe der Stellung der ersten Luftleitelemente abgelenkt wird. In einer Neutralstellung der ersten Luftleitelemente wird die Luft nicht abgelenkt und strömt im Wesentlichen geradlinig aus. Werden die ersten Luftleitelemente verschwenkt, so wird die den Luftkanal durchströmende Luft entsprechend abgelenkt, wobei der Luftstrom bspw. nach oben oder unten geleitet wird. Der Luftstrom kann dann an den gegenüberliegenden Gehäusewänden des vorderen Abschnitts des Luftkanals zusätzlich abgelenkt werden. Bspw. strömt die Luft an einer Gehäusewand entlang und erfährt hierüber eine Ablenkung, wobei unter Ausnutzung des Coanda-Effekts die Luft aus dem Luftausströmer abgelenkt ausströmt.

Im Stand der Technik wird zur Luftablenkung stets ein Teilbereich eines Öffnungsquerschnitts geschlossen, um den Luftstrom entsprechend abzulenken. Die hierin beschriebene Lösung des Luftausströmers bewirkt kein Verschließen oder Verkleinern eines Öffnungsquerschnitts, sodass Druckverluste und sehr hohe Strömungsgeschwindigkeiten der ausströmenden Luft vermieden werden.

Zudem weist der Luftausströmer einen einfachen Aufbau auf. Es sind keine komplexen Verstellkinematiken erforderlich, um beispielsweise Flügel oder andere Ablenkeinrichtungen zu steuern.

Die ersten Luftleitelemente sind so im Gehäuse des Luftausströmers angeordnet, dass die Schwenkachsen der beiden ersten Luftleitelemente durch die der Luftaustrittsöffnung abgewandten Stirnseiten der ersten Luftleitelemente verlaufen. Hierbei verlaufen die ersten Luftleitelemente in Luftströmungsrichtung aufeinander zu. Soll die Luft über die ersten Luftleitelemente abgelenkt werden, so werden die ersten Luftleitelemente verschwenkt, wobei beispielsweise eines der ersten Luftleitelemente sich an eine entsprechende Gehäusewand des Luftausströmers annähert oder anlegt und das andere erste Luftleitelement in den Luftkanal weiter hineinragt. Jedoch ist auch an einer solchen Stellung der Abstand zwischen den beiden vorderen Stirnseiten, die den Stirnseiten mit den Schwenkachsen entgegengesetzt ausgerichtet sind, gleich groß.

Die zur Luftaustrittsöffnung versetzt in den Luftkanal hinein verschwenkbar gelagerten ersten Luftleitelemente ermöglichen es, insbesondere ohne weitere Luftleitelemente, eine Luftablenkung über einen weiten Ausströmbereich bereitzustellen. In weiteren Ausführungsformen können jedoch weitere Luftleitelemente vorgesehen sein, welche eine Luftablenkung unterstützen und/oder optischen Anforderungen Rechnung tragen.

Der Luftausströmer weist ferner ein zweites Luftleitelement auf, welches in dem vorderen Abschnitt des Luftausströmers angeordnet ist, wobei der vordere Abschnitt gegenüberliegende gekrümmte Gehäusewände aufweist. Das zweite Luftleitelement erstreckt sich vorzugsweise mittig im Luftkanal.

Das zweite Luftleitelement ist starr und unbeweglich im Gehäuse des Luftausströmers angeordnet. Bewegliche Komponenten, wie bspw. eine Lamellenanordnung und die ersten Luftleitelemente, befinden sich in Luftströmungsrichtung vor dem zweiten Luftleitelement und sind daher von außen im Wesentlichen nicht sichtbar.

Der Luftausströmer weist zudem eine Lamellenanordnung mit einer ersten Gruppe von Lamellen und einer zweiten Gruppe von Lamellen auf, wobei die erste Gruppe von Lamellen und die zweite Gruppe von Lamellen jeweils zwischen dem zweiten Luftleitelement und einer gegenüberliegenden Gehäusewand verschwenkbar gelagert sind.

Die Luftablenkung über die Lamellenanordnung bewirkt im Wesentlichen keinen Druckverlust oder erhöhte Strömungsgeschwindigkeiten. Ferner weist das Gehäuse einen solchen Aufbau auf, dass eine Luftablenkung über die Lamellenanordnung unterstützt wird. Zudem wird über die Ausbildung des Gehäuses das Auftreten von Druckunterschieden über die Lamellenanordnung verhindert.

Das zweite Luftleitelement kann ein verschiebbar und/oder verschwenkbar gelagertes Bedienelement aufweisen. Das Bedienelement kann aus einem ersten Bedienelement und einem zweiten Bedienelement bestehen, wobei das erste Bedienelement zum Verschwenken der Lamellen der Lamellenanordnung dienen kann. Über das zweite Bedienelement kann beispielsweise ein Verschwenken der ersten Luftleitelemente erreicht werden.

Das Bedienelement kann mit der ersten Gruppe von Lamellen und der zweiten Gruppe von Lamellen über ein Verstellelement gekoppelt sein. Für ein Verstellelement können verschiedene Bauteile verwendet werden.

So kann das Verstellelement parallel zum zweiten Luftleitelement verlaufen und eine Vielzahl von Öffnungen aufweisen, in welchen Verbindungswellen zwischen der ersten Gruppe von Lamellen und der zweiten Gruppe von Lamellen aufgenommen sind. Ferner kann das Verstellelement auch eine Gabel aufweisen, die mit einem Paar gegenüberliegender Lamellen der ersten Gruppe von Lamellen und der zweiten Gruppe von Lamellen gekoppelt ist.

Ein Verstellelement mit einer Vielzahl von Öffnungen ermöglicht es, jeweils Paare gegenüberliegender Lamellen der ersten Gruppe von Lamellen und der zweiten Gruppe von Lamellen ohne zusätzliche Koppelelemente zu verschwenken. Jeweils eine Lamelle der ersten Gruppe von Lamellen ist mit einer gegenüberliegenden Lamelle der zweiten Gruppe von Lamellen über eine Verbindungswelle verbunden. Das Verstellelement umgreift die Verbindungswellen in Form von Langlöchern bzw. ausnehmenden Öffnungen, sodass auch ein Ausgleich beim Verschwenken der Lamellen erfolgt. Zudem wird einem Verschwenken eines zweiten Bedienelements Rechnung getragen, sodass unabhängig von der jeweiligen Ausrichtung der ersten Luftleitelemente und der Lamellen der Lamellenanordnung eine Luftablenkung erreicht wird.

Weist das Verstellelement eine Gabel auf, so erfolgt ein Verschwenken analog zu der vorstehend beschriebenen Ausführungsform. Jedoch umgreift die Gabel nur eine Verbindungswelle und die anderen Lamellen sind jeweils über eine Koppelstange miteinander verbunden.

Das Bedienelement ist in weiteren Ausführungsformen mit den ersten Luftleitelementen gekoppelt. Das Bedienelement bzw. ein zweites Bedienelement, kann in einem zweiten Luftleitelement verschwenkbar gelagert sein. Ein Verschwenken bewirkt die Bewegung weiterer Elemente um eine Kurvenbahn, die wiederum mit den ersten Luftleitelementen verbunden sind. Die ersten Luftleitelemente sind stets miteinander gekoppelt, sodass der Abstand der beiden vorderen Stirnseiten der ersten Luftelemente in sämtlichen Stellungen dieser beibehalten wird. Ein erstes Bedienelement, das vorzugsweise zum Verschwenken der Lamellen der Lamellenanordnung vorgesehen ist, kann in einer entsprechenden Öffnung eines zweiten Bedienelements verschiebbar aufgenommen sein. Das erste Bedienelement und das zweite Bedienelement ragen dann beispielsweise aus einer vorderen Öffnung des zweiten Luftleitelementes heraus.

Das zweite Luftleitelement kann ferner einen keulenartigen Querschnitt aufweisen. Der keulenartige Querschnitt kann beispielsweise so ausgebildet sein, dass der zulaufende Teil der Keule zur Luftaustrittsöffnung hin ragt. In weiteren Ausführungsformen ragt der zulaufende Teil des keulenartigen zweiten Luftleitelements in Richtung der Lufteintrittsöffnung.

Das zweite Luftleitelement kann ferner ein Leitelement aufweisen, welches einer Lufteintrittsöffnung zugewandt ist. Das Leitelement befindet sich daher auf der der Luftaustrittsöffnung abgewandten Seite des zweiten Luftleitelements. Dieses Leitelement dient zur Zuführung der Luft zu den beiden Gruppen von Lamellen.

In dem zweiten Luftleitelement kann eine Welle drehbar gelagert sein, die mit dem Bedienelement verbunden und mit den ersten Luftleitelementen gekoppelt ist. Die Welle kann beispielsweise als Teil des zweiten Bedienelements ausgebildet sein. Ferner kann die Welle auch mit einem zweiten Bedienelement verbunden sein. Vorzugsweise verläuft die Welle parallel zu einer Schwenkachse des zweiten Bedienelementes, sodass eine einfache Übertragung der Schwenkbewegung des zweiten Bedienelements für eine Verschwenkbewegung der ersten Luftleitelemente erreicht wird.

Die Welle kann aus dem Luftkanal herausgeführt und mit den ersten Luftleitelementen außerhalb des Luftkanals gekoppelt sein. Eine Kopplung der ersten Luftleitelemente außerhalb des Luftkanals mit den Bedienelementen ermöglicht einen einfachen Aufbau und verhindert, dass Komponenten zum Verschwenken der ersten Luftleitelemente eine Luftablenkung stören. In einem Luftkanal angeordnete Verstellelemente bewirken im Stand der Technik oftmals eine ungewollte Luftablenkung und führen zu störenden Geräuschen.

In weiteren Ausführungsformen weist der Luftkanal im Bereich der ersten Luftleitelemente einen Abschnitt mit einem größeren Durchmesser auf, oder der Luftkanal weist den ersten Luftleitelementen in Luftströmungsrichtung vorgelagert einen Abschnitt mit einem kleineren Durchmesser auf, wobei der Querschnitt dieses Abschnitts gegenüber dem Querschnitt des Bereichs reduziert ist, in dem ersten Luftleitelemente gelagert sind.

Der Abschnitt mit einem größeren Durchmesser im Bereich der ersten Luftleitelemente dient dazu, die ersten Luftleitelemente in verschiedenen Stellungen aufzunehmen.

Ein den ersten Luftleitelementen in Luftströmungsrichtung vorgelagerter Abschnitt mit einem kleineren Durchmesser dient dabei dazu, eine Luftzuführung zu den ersten Luftleitelementen bereitzustellen, wobei die Luft nur den zugewandten Flächen der Luftleitelemente zuzuführen ist, wenn die ersten Luftleitelemente innerhalb des Luftkanals so angeordnet sind, dass diese beabstandet zu den entsprechenden Gehäusewänden angeordnet sind.

In der ersten Variante der vorstehend beschriebenen Ausbildungen des Luftkanals befinden sich die Lamellen über ihre Schwenkachsen im Wesentlichen im Bereich gegenüberliegender Gehäusewände. In der zweiten Variante befinden sich die Schwenkachsen jedoch beabstandet zu diesen Gehäusewänden, sodass über eine Verkleinerung des Luftkanals ein Hinterströmen der ersten Luftleitelemente verhindert wird.

In weiteren Ausführungsformen sind die gegenüberliegenden gekrümmten Gehäusewände konzentrisch zu dem zweiten Luftleitelement angeordnet und der Abstand zwischen dem zweiten Luftleitelement und den gegenüberliegenden gekrümmten Gehäusewänden ist im Wesentlichen gleich groß. Eine solche Ausbildung unterstützt die Vermeidung eines Druckverlusts und ermöglicht die Beibehaltung von gleichbleibenden Strömungsgeschwindigkeiten in verschiedenen Stellungen der ersten Luftleitelemente sowie der Lamellenanordnung.

Die Komponenten des Luftausströmers können überwiegend aus Kunststoff gefertigt sein. Vorzugsweise werden diese in einem Spritzgussprozess hergestellt und sind daher in hoher Stückzahl kostengünstig zu fertigen. Die Kunststoffe können verschiedene Zusätze aufweisen, um bestimmte Eigenschaften hinsichtlich ihrer Verwendung (z.B. Steifigkeit, Kratzfestigkeit, etc.) erfüllen.

In weiteren Ausführungsformen können auch Beleuchtungselemente vorgesehen sein. Hierzu können Leuchtdioden im Bereich des Gehäuses angeordnet sein, die eine direkte oder indirekte Beleuchtung der Komponenten bewirken. Ferner können die Komponenten lichtleitende Elemente aufweisen oder aus solchen Werkstoffen bestehen.

### Kurzbeschreibung der Figuren

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Frontansicht eines Luftausströmers einer ersten Ausführungsform;
- Fig. 2: eine schematische Schnittansicht durch den Luftausströmer der ersten Ausführungsform;
- Fig. 3: eine weitere schematische Schnittansicht durch den Luftausströmer der ersten Ausführungsform;
- Fig. 4: eine noch weitere schematische Schnittansicht durch den Luftausströmer der ersten Ausführungsform mit verschwenkten ersten Luftleitelementen;
- Fig. 5: eine vergrößerte Darstellung eines vorderen Bereichs des Luftausströmers der ersten Ausführungsform im Schnitt;
- Fig. 6: eine weitere Schnittansicht durch den Luftausströmer der ersten Ausführungsform mit verschwenkten Lamellen;
- Fig. 7: eine schematische Frontansicht eines Luftausströmers einer zweiten Ausführungsform;
- Fig. 8: eine schematische Schnittansicht durch den Luftausströmer der zweiten Ausführungsform;
- Fig. 9: eine weitere schematische Schnittansicht durch den Luftausströmer der zweiten Ausführungsform;
- Fig. 10: eine schematische Schnittansicht des Luftausströmers der ersten Ausführungsform in einer Neutralstellung;
- Fig. 11: eine schematische Schnittansicht des Luftausströmers der ersten Ausführungsform mit verschwenkten ersten Luftleitelementen;
- Fig. 12: eine schematische Schnittansicht eines Luftausströmers einer dritten Ausführungsform mit verschwenkten ersten Luftleitelementen;
- Fig. 13: eine schematische Schnittansicht eines Luftausströmers einer vierten Ausführungsform mit verschwenkten ersten Luftleitelementen;
- Fig. 14: eine schematische Schnittansicht eines Luftausströmers einer fünften Ausführungsform mit verschwenkten ersten Luftleitelementen;
- Fig. 15: eine schematische Schnittansicht eines Luftausströmers einer sechsten Ausführungsform mit verschwenkten ersten Luftleitelementen;
- Fig. 16: eine schematische Schnittansicht eines Luftausströmers einer siebten Ausführungsform mit verschwenkten ersten Luftleitelementen;
- Fig. 17: eine schematische Schnittansicht eines Luftausströmers einer achten Ausführungsform mit verschwenkten ersten Luftleitelementen; und
- Fig. 18: eine schematische Schnittansicht eines Luftausströmers einer neunten Ausführungsform mit verschwenkten ersten Luftleitelementen.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu beschreiben und zu zeigen, welche nicht wesentlich zum Verständnis der hierin offenbarten technischen Lehre sind.

Ausführliche Beschreibung von Ausführungsbeispielen:

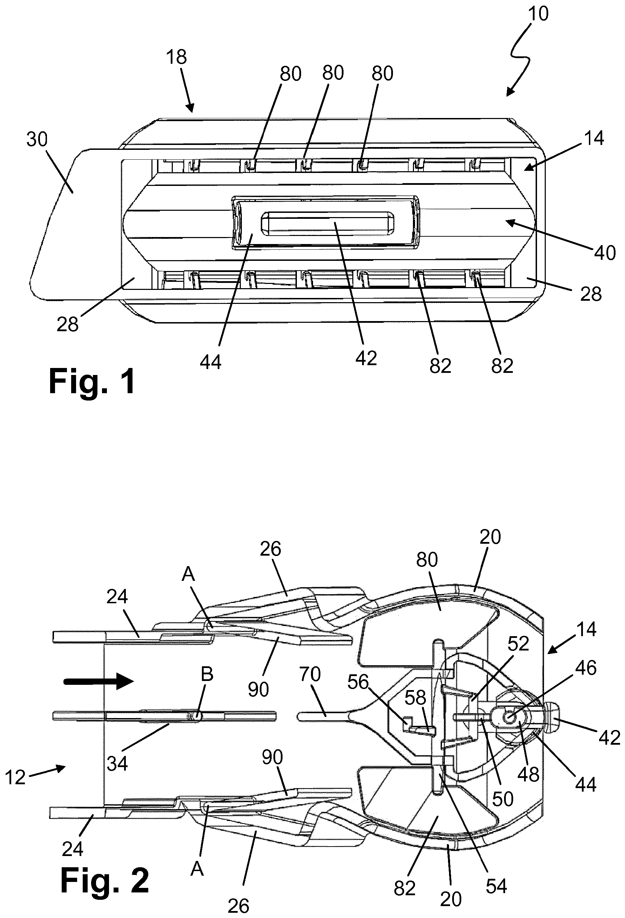

Fig. 1 zeigt eine schematische Frontansicht eines Luftausströmers 10 einer ersten Ausführungsform. Der Luftausströmer 10 weist ein Gehäuse 18, ein zweites Luftleitelement 40, eine Lamellenanordnung sowie erste Luftleitelemente 90 und eine Schließklappe 34 auf.

Im Bereich einer Luftaustrittsöffnung 14 weist das Gehäuse 18 eine Blende 30 auf. Die Blende 30 umgibt die Luftaustrittsöffnung 14. In Luftströmungsrichtung, ausgehend von einer Lufteintrittsöffnung 12, die sich am entgegengesetzten Ende zur Luftaustrittsöffnung 14 befindet, sind die Schließklappe 34, die ersten Lamellen 90 sowie die Lamellenanordnung und das zweite Luftleitelement 40 angeordnet. Die Lamellenanordnung besteht aus einer ersten Gruppe von Lamellen 80 und einer zweiten Gruppe von Lamellen 82, die jeweils zwischen gegenüberliegenden Gehäusewänden 20 und dem zweiten Luftleitelement 40 angeordnet sind. Das zweite Luftleitelement 40 ist starr im Gehäuse 18 angeordnet und kann nicht verschwenkt werden. Ausströmende Luft kann aber entlang der Oberfläche des zweiten Luftleitelementes 40 unter Ausnutzung des Coanda-Effekts abgelenkt werden. Grundsätzlich sind die gegenüberliegenden Gehäusewände 20 und die Oberfläche des zweiten Luftleitelements 40 im Luftaustrittsbereich 14 so geformt, dass eine definierte Luftablenkung erreicht wird. Wesentlich für die Luftablenkung ist jedoch die Stellung der ersten Luftleitelemente 90 sowie die Zuführung des den Luftkanal 16 durchströmenden Luftstroms zu einem Abschnitt im Bereich der Lamellen 80 und einem Bereich der Lamellen 82. Weiterhin wird über die Lamellen 80 und 82 eine weitere Luftablenkung orthogonal zur Luftablenkung über die ersten Luftleitelemente 90 erreicht.

An der Vorderseite weist das zweite Luftleitelement 40 eine Öffnung auf, über welche ein erstes Bedienelement 42 und ein zweites Bedienelement 44 abschnittsweise herausragen. Das erste Bedienelement 42 kann entlang der Längsachse des zweiten Luftleitelementes 40 in Blickrichtung auf Fig. 1 nach rechts und links verschoben werden. Das erste Bedienelement 42 ist hierbei mit den Lamellen 80 und 82 gekoppelt, wobei ein Verschieben des ersten Bedienelements 42 ein entsprechendes Verschwenken der Lamellen 80 und 82 bewirkt. Das zweite Bedienelement 44 ist um die Längsachse des zweiten Luftleitelementes 40 verschwenkbar und mit den ersten Luftleitelementen 90 gekoppelt.

Das erste Bedienelement 42 ist in einer Öffnung in dem zweiten Bedienelement 44 aufgenommen. Das Bedienelement 42 kann innerhalb der Öffnung des Bedienelementes 44 ebenfalls nur nach rechts und links verschoben werden. Wird das Bedienelement 42 nach oben oder unten (Fig. 1) bewegt, so erfolgt ein Verschwenken des zweiten Bedienelementes 44 um die Längsachse des zweiten Luftleitelementes 40.

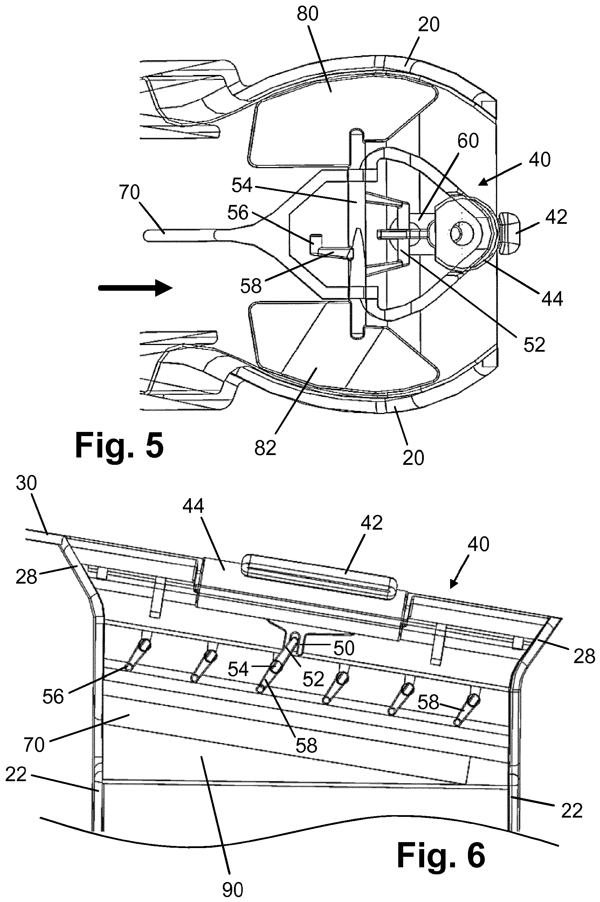

Das zweite Luftleitelement 40 weist an seinem vorderen Ende eine größere Breite auf als an seinem hinteren Ende. Hierzu ist das Gehäuse 18 des Luftausströmers 10 so ausgebildet, dass die Gehäuseabschnitte 28 trichterförmig nach außen, in Richtung der Luftaustrittsöffnung 14, ragen. Die Neigung der Gehäuseabschnitte 28 entspricht im Wesentlichen einer Maximalstellung der Lamellen 80 und 82 (siehe beispielsweise Fig. 6).

Fig. 2 zeigt eine schematische Schnittansicht durch den Luftausströmer 10 der ersten Ausführungsform. Die Luftströmungsrichtung durch den Luftkanal 16 wird durch den dicken Pfeil im Bereich der Lufteintrittsöffnung 12 angezeigt. Die Schließklappe 34 befindet sich in der Darstellung von Fig. 2 in einer vollständig geöffneten Stellung, sodass der zugeführte Luftstrom ungehindert in den Luftkanal 16 eintreten kann. Zur Änderung der Menge der zugeführten Luft und zum vollständigen Absperren des Luftkanals 16 kann die Schließklappe 34 um die Schwenkachse B verschwenkt werden, wobei die Klappen der Schließklappe 34 sich an den gegenüberliegenden Gehäusewänden 24 anlegen. Hierzu sei angemerkt, dass die Darstellung von Fig. 2 eine perspektivische Darstellung zeigt. Die Schwenkachse B verläuft dabei mittig durch die Schließklappe 34.

Die ersten Luftleitelemente 90 sind um Schwenkachsen A im Bereich von gegenüberliegenden Gehäuseabschnitten 26 verschwenkbar gelagert. Die Vergrößerung des Querschnitts des Luftkanals 16 über die Gehäuseabschnitte 26 ermöglicht eine Aufnahme der ersten Luftleitelemente 90 in ihren verschwenkten Stellungen. Die ersten Luftleitelemente 90 sind so ausgerichtet, dass diese den Querschnitt des Luftkanals 16 verkleinern. Zudem sind die beiden ersten Luftleitelemente 90 miteinander gekoppelt, sodass ein Verschwenken der beiden ersten Luftleitelemente 90 stets gemeinsam erfolgt. Ferner wird der Abstand derjenigen Stirnseiten der ersten Luftleitelemente 90, welche den Stirnseiten, durch welche die Schwenkachsen A verlaufen, entgegengesetzt sind, stets beibehalten. Hierüber wird erreicht, dass der Querschnitt des Luftkanals 16 unabhängig von der Stellung der ersten Luftleitelemente 90 nicht verändert wird. Dies ermöglicht es, Druckverluste in den verschiedenen Stellungen der Lamellen 80 und 82 sowie der ersten Luftleitelemente 90 auszuschließen. Bei Luftausströmern aus dem Stand der Technik erfolgt eine Luftzuführung zu verschiedenen Teilkanälen stets über ein Absperren des Teilkanals durch eine Querschnittsänderung. Der Luftausströmer 10 der hierin beschriebenen Varianten ermöglicht eine Luftablenkung ohne Druckverlust. Durch die Beibehaltung des Querschnitts werden auch hohe Strömungsgeschwindigkeiten der ausgegebenen Luft verhindert.

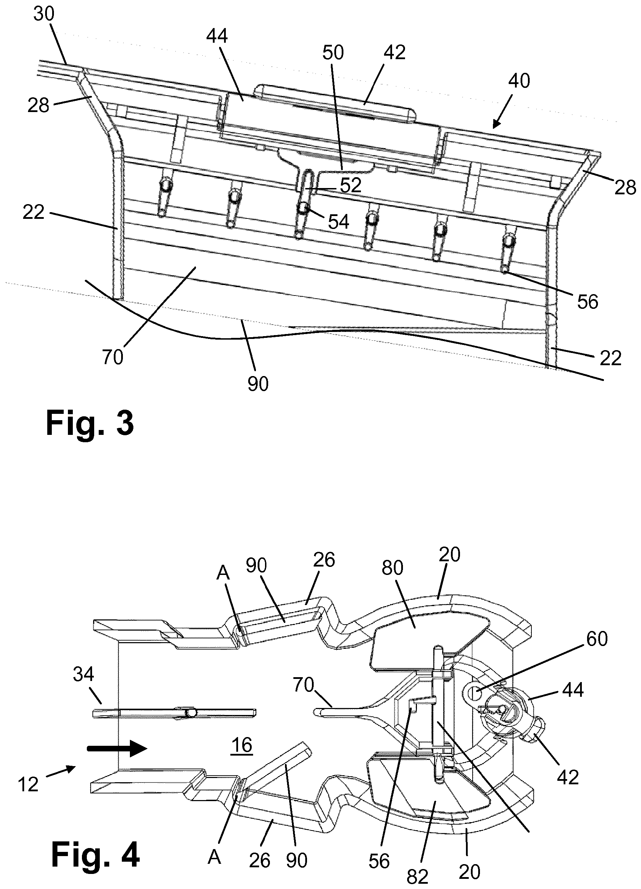

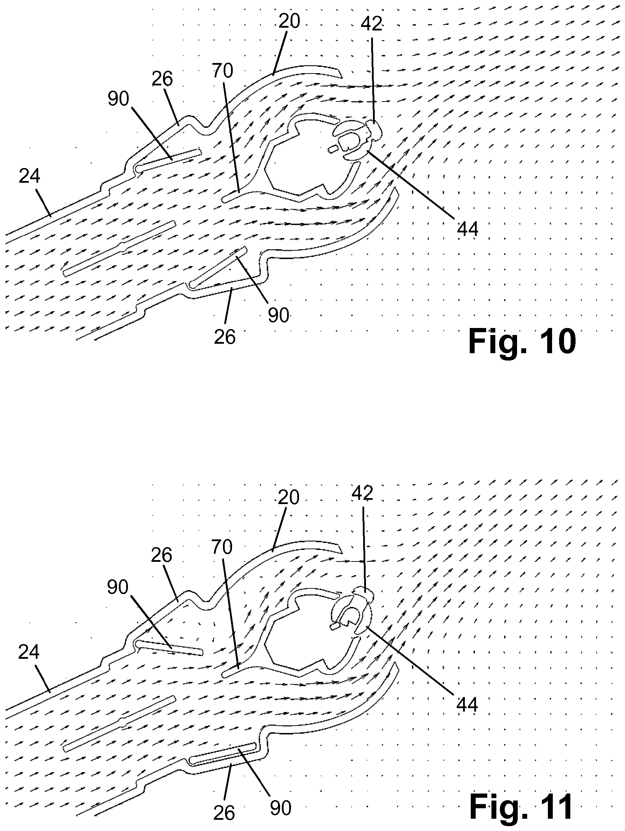

Das zweite Luftleitelement 40 weist an seinem hinteren, der Lufteintrittsöffnung 12 zugewandten Ende ein Leitelement 70 auf. Das Leitelement 70 dient zur Zuführung der einströmenden Luft zu dem Bereich mit den Lamellen 80 und zum Zuführen der Luft zu dem Bereich der Lamellen 82. In Abhängigkeit der Stellung der ersten Luftleitelemente 90 (siehe beispielsweise Fig. 4 und 11) wird eine Luftablenkung nach oben bzw. nach unten (Fig. 4) erreicht. Gegenüber konventionellen Luftausströmern aus dem Stand der Technik erfolgt jedoch kein Druckverlust und es ergeben sich auch keine erhöhten Strömungsgeschwindigkeiten, da der Querschnitt zwischen den beiden vorderen Stirnseiten der ersten Luftleitelemente 90 gleich bleibt.

Die Darstellung von Fig. 2 weist beispielhaften Charakter auf. So kann beispielsweise die Länge der ersten Luftleitelemente 90 auch größer sein, sodass einerseits der Querschnitt zwischen den beiden vorderen Stirnseiten und damit der Querschnitt des Luftkanals 16 im Bereich, in welchem eine Luftzuführung möglich ist, deutlich kleiner sind. In diesem Fall ergeben sich höhere Strömungsgeschwindigkeiten. Die Strömungsgeschwindigkeiten bleiben jedoch unabhängig von der Stellung der ersten Luftleitelemente 90 gleich. Bei längeren ersten Luftleitelementen 90 können diese beispielsweise auch nahezu oder vollständig an dem Leitelement 70 anliegen, wenn beispielsweise die ersten Luftleitelemente 90 vollständig nach unten bzw. nach oben verschwenkt sind. Der Abstand zwischen den Stirnseiten der beiden ersten Luftleitelemente 90 wird jedoch nicht verändert. Unabhängig von der Zuführung von einströmender Luft zu den Bereichen mit den Lamellen 80 und 82 bestimmt der Abstand zwischen den vorderen Stirnseiten die Menge an zugeführter Luft und damit die Strömungsgeschwindigkeit.

Das zweite Luftleitelement 40 weist in der Darstellung von Fig. 2 Öffnungen auf, durch welche Wellen 54 geführt sind. Die Wellen 54 sind mit den Lamellen 80 und 82 fest verbunden, sodass ein Verdrehen der Wellen 54 ein Verschwenken der Lamellen 80 und 82 bewirkt. Die Lamellen 80 und 82 sind daher direkt miteinander gekoppelt und weisen stets die gleiche Ausrichtung auf. Zusätzlich weist eine mittlere Welle 54 (siehe Fig. 2) einen Bügel 52 auf. Der Bügel 52 wird von einer Gabel 50 umgriffen. Die Gabel 50 ist mit einer Bedienwelle 46 verbunden. Die Bedienwelle 46 ist in entsprechenden Lageröffnungen einer Aufnahme 48 verdrehbar gelagert. Die Aufnahme 48 ist Bestandteil des ersten Bedienelements 42. Wird das zweite Bedienelement 42 verschoben, so führt dies zwangsläufig über die Aufnahme 48, die Bedienwelle 46 und die Gabel 50 zu einem Verschwenken der Lamellen 80 und 82.

Die Aufnahme der Bedienwelle 46 in einer Öffnung der Aufnahme 48 stellt zudem sicher, dass auch bei einem Verschwenken des zweiten Bedienelementes 44 ein Verschwenken der Lamellen 80 und 82 durchgeführt werden kann, und dass keine Beeinflussung der Ausrichtung der Lamellen 80 und 82 auftritt.

An der Rückseite der Wellen 54 sind Stege 58 angeordnet, von welchen sich jeweils ein Koppelzapfen 56 nach oben erstreckt. Über die Koppelzapfen 56 sind die Paare gegenüberliegender Lamellen 80 und 82 miteinander gekoppelt, sodass ein Verschwenken der Welle 54 von Fig. 2 automatisch ein Verschwenken weiterer Wellen und damit der Lamellen 80 und 82 bewirkt.

Die Kinematikelemente zum Verschwenken der Lamellen 80 und 82 sind innerhalb des zweiten Luftleitelements 40 aufgenommen. Das zweite Luftleitelement 40 ist hierzu im Wesentlichen hohl ausgeführt. Beispielsweise kann das zweite Luftleitelement aus einem vorderen und einem hinteren Gehäuseteil bestehen, die miteinander verbunden werden. Vorteilhafterweise befinden sich dabei Kinematikelemente zum Verschwenken der Lamellen 80 und 82 nicht im Bereich von durchströmender Luft und sind zudem geschützt.

Das zweite Bedienelement 44 weist ein Kopplungselement 60 auf, welches mit den ersten Luftleitelementen 90 gekoppelt ist (siehe Fig. 4).

Die Lamellen 80 und 82 sind lediglich über die Welle 54 drehbar gelagert. Daher befinden sich keine Lageröffnungen und Lagerzapfen zwischen den Außenkanten der Lamellen 80 und 82 sowie den gegenüberliegenden Gehäusewänden 20.

Fig. 3 zeigt eine weitere schematische Schnittansicht durch den Luftausströmer 10 der ersten Ausführungsform. Fig. 3 zeigt eine Neutralstellung des Luftausströmers 10, wobei die ersten Luftleitelemente 90 und die Lamellen 80 und 82 der Lamellenanordnung nicht verschwenkt sind. In Fig. 3 ist die Ausbildung des ersten Bedienelements 42 und dessen Kopplung mit der Gabel 50 dargestellt. Wird das erste Bedienelement 42 entlang des zweiten Bedienelements 44 sowie der Vorderseite des zweiten Luftleitelements 40 verschoben, so bewirkt dies eine Verlagerung der Gabel 50. Die Gabel 50 umgreift den Bügel 52. Eine Verlagerung der Gabel 50 bewirkt damit automatisch ein Verschwenken der Lamellen 80 und 82. Die jeweiligen Achsen 54 mit den Koppelzapfen 56 sind über eine nicht dargestellte Koppelstange miteinander verbunden. Hierüber erfolgt eine Kopplung sämtlicher Paare gegenüberliegender Lamellen 80 und 82 der Lamellenanordnung.

Fig. 4 zeigt eine noch weitere schematische Schnittansicht durch den Luftausströmer 10 der ersten Ausführungsform mit verschwenkten ersten Luftleitelementen 90. Zum Verschwenken der ersten Luftleitelemente 90 ist das erste Bedienelement 42 nach unten verschwenkt worden. Dies führt zudem zu einem Verschwenken des zweiten Bedienelementes 44, welches Kopplungselemente 60 aufweist. Die Kopplungselemente 60 weisen eine Öffnung auf, in welche eine Welle aufgenommen ist. Die Welle ist außerhalb des Gehäuses 18 mit einem Gestänge und/oder einer Zahnradanordnung mit den ersten Luftleitelementen 90 gekoppelt, wobei die ersten Luftleitelemente 90 stets so verschwenkt werden, dass der Abstand zwischen den vorderen Kanten bzw. Stirnseiten der ersten Luftleitelemente 90 gleich bleibt. In Fig. 4 ist das untere erste Luftleitelement 90 nach oben verschwenkt, wobei einströmende Luft in den Bereich des Luftkanals 16 geführt wird, in dem sich die Lamellen 80 befinden. Das obere erste Luftleitelement 90 ist in dem Gehäuseabschnitt 26 aufgenommen. Einströmende Luft wird daher nur über das untere erste Luftleitelement 90 gelenkt.

In der Darstellung von Fig. 4 strömt einströmende Luft auch ebenfalls in den Bereich mit den Lamellen 82. Um dies zu verhindern können die ersten Luftleitelemente 90 eine deutlich größere Länge aufweisen, sodass diese beispielsweise sich bis zu dem Leitelement 70 erstrecken. In einer solchen Ausführungsform ist der Abstand zwischen den vorderen Kanten der ersten Luftleitelemente 90 dann kleiner als in der in Fig. 4 gezeigten Ausführungsform. Jedoch bleibt auch in dieser Ausführungsform der Abstand zwischen den vorderen Kanten der ersten Luftleitelemente 90 gleich, sodass es zu keinem Druckverlust unabhängig von der Stellung der ersten Luftleitelemente 90 kommt.

Fig. 5 zeigt eine vergrößerte Darstellung eines vorderen Bereichs des Luftausströmers 10 der ersten Ausführungsform im Schnitt. Die gegenüberliegenden gekrümmten Gehäusewände 20 des Luftausströmers 10 sind konzentrisch zu dem zweiten Luftleitelement 40 angeordnet, wobei der Abstand zwischen dem zweiten Luftleitelement 40 und den gegenüberliegenden gekrümmten Gehäusewänden 20 im Wesentlichen gleich ist. Die konzentrische Anordnung des zweiten Luftleitelements 40 zu den gegenüberliegenden Gehäusewänden 20 sorgt für eine optimierte Luftablenkung. Engstellen zwischen den gegenüberliegenden gekrümmten Gehäusewänden 20 und dem zweiten Luftleitelement 40 könnten zu einer Kompression der Luft im Bereich der Luftaustrittsöffnung 14 führen, was die Ablenkung der Luft verschlechtert und zudem Druckverluste sowie starke Strömungsgeschwindigkeiten hervorrufen würde.

Fig. 6 zeigt eine weitere Schnittansicht durch den Luftausströmer 10 der ersten Ausführungsform mit verschwenkten Lamellen 80 und 82. Hierzu ist das erste Bedienelement 42 nach rechts (Fig. 6) verschoben. Entsprechend ist die Gabel 50 nach rechts verschoben, was zu einem Verschwenken der Welle 54 führt. Dementsprechend sind die Lamellen 80 und 82, die über eine Koppelstange und die Koppelzapfen 56 verbunden sind, verschwenkt.

Die Ausrichtung der Stege 58 gibt dabei im Wesentlichen die Ausrichtung der Lamellen 80 und 82 und damit die Luftablenkung vor. Die Gehäuseabschnitte 28, die in Verlängerung zu den gegenüberliegenden Gehäusewänden 22 trichterförmig nach außen ragen, sind im Wesentlichen so ausgerichtet, dass diese einer Verlängerung der maximalen Ausrichtung der Lamellen 80 und 82 entsprechen.

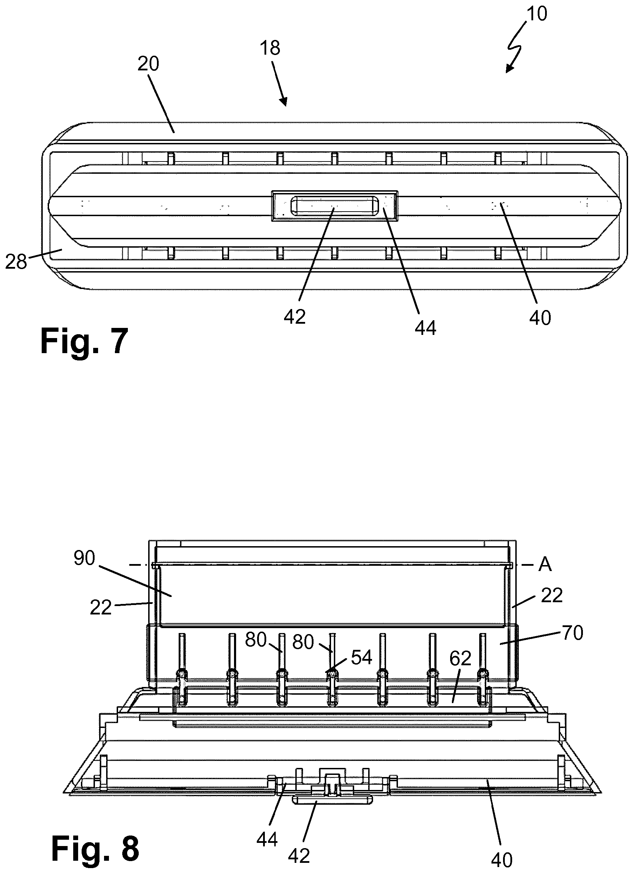

Fig. 7 zeigt eine schematische Frontansicht eines Luftausströmers 10 einer zweiten Ausführungsform. Der Luftausströmer der zweiten Ausführungsform unterscheidet sich vom Luftausströmer 10 der ersten Ausführungsform durch die Anordnung der ersten Luftleitelemente 90 und die Ausbildung der gegenüberliegenden Gehäusewände 24 im Luftkanal 16.

Fig. 8 zeigt eine schematische Schnittansicht durch den Luftausströmer 10 der zweiten Ausführungsform. Analog zu der ersten Ausführungsform weist der Luftausströmer 10 ein zweites Luftleitelement 40, eine Lamellenanordnung mit Lamellen 80 und 82 sowie zwei erste Luftleitelemente 90 auf.

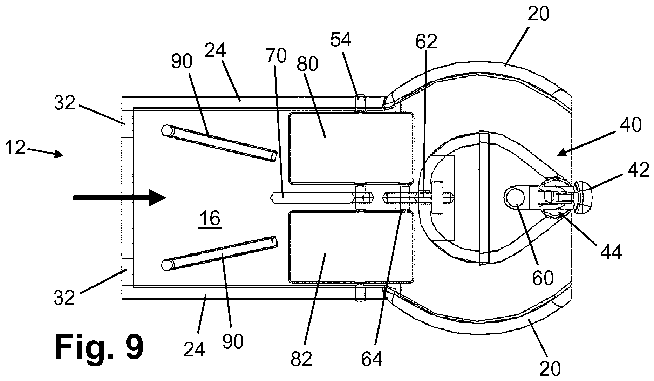

Zusätzlich besteht zwischen dem Leitelement 70 und der Rückseite des zweiten Luftleitelements 40 ein Abstand. Das Leitelement 70 ist daher nicht direkt mit dem zweiten Luftleitelement 40 verbunden. Von der Rückseite des zweiten Luftleitelements 40 steht ein Verstellelement 62 (siehe Fig. 9) ab, das zum Verschwenken der Lamellenanordnung dient.

Fig. 9 zeigt eine weitere schematische Schnittansicht durch den Luftausströmer 10 der zweiten Ausführungsform. Der Luftkanal 16 weist im Bereich der Lufteintrittsöffnung 12 Wände 32 auf, die den Querschnitt des Luftkanals 16 verkleinern.

Hinter diesen Wänden 32 sind die ersten Luftleitelemente 90 angeordnet. Die Schwenkachsen A der ersten Luftleitelemente 90 verlaufen dabei nicht im Bereich der gegenüberliegenden Gehäusewände 24 sondern beabstandet zu diesen. Aus diesem Grund wird die einströmende Luft über die Wände 32 gezielt auf die gegenüberliegenden inneren Flächen der ersten Luftleitelemente 90 geführt.

Das Leitelement 70 weist Öffnungen auf, durch welche die Wellen 54 laufen. Die Wellen 54 verbinden die Lamellen 80 und 82. Die Lamellen 80 und 82 sind über die Wellen 54 in den gegenüberliegenden Gehäusewänden 24 des Luftausströmers 10 drehbar gelagert. An ihren gegenüberliegenden Abschnitten weisen die Lamellen 80 und 82 Verbindungswellen 64 auf, welche jeweils eine Lamelle 80 mit einer gegenüberliegenden Lamelle 82 verbinden. Das Verstellelement 62 besteht aus einer parallel zu dem zweiten Luftleitelement 40 verlaufenden flachen Platte mit einer Vielzahl von Öffnungen, welche die Verbindungswellen 64 umgreifen. Zum Verschwenken der Lamellen 80 und 82 wird das Verstellelement 62 nach links und rechts verschoben, was automatisch ein Verschwenken der Lamellen 80 und 82 bewirkt. Über die Kopplung mit dem Verstellelement 62 ist ein zusätzliches Koppelelement bzw. eine Koppelstange nicht erforderlich. Das Verstellelement 62 ist mit dem ersten Bedienelement 42 gekoppelt, sodass analog zur ersten Ausführungsform ein Verschieben des ersten Bedienelements 42 ein Verschwenken der Lamellenanordnung bewirkt. Zusätzlich weist das zweite Luftleitelement 40 ein zweites Bedienelement 44 auf, das über das Kopplungselement 60 ein Verschwenken der ersten Luftleitelemente 90 bewirkt, wie bereits für die erste Ausführungsform beschrieben.

Fig. 10 zeigt eine schematische Schnittansicht des Luftausströmers der ersten Ausführungsform in einer Neutralstellung. Insbesondere ist der Strömungsweg der durchströmenden Luft durch die kleinen Pfeile dargestellt. Wie der Darstellung entnommen werden kann, durchströmt die Luft die beiden Luftkanäle zwischen den gegenüberliegenden Gehäusewänden 20 und dem zweiten Luftleitelement 40 gleichmäßig, was zu einem geradlinigen Ausströmen der Luft in Verlängerung des Luftkanals 16 führt.

Fig. 11 zeigt eine schematische Schnittansicht des Luftausströmers 10 der ersten Ausführungsform mit verschwenkten ersten Luftleitelementen 90. Wie der Darstellung entnommen werden kann, wird ein größerer Luftstrom dem Bereich zwischen dem zweiten Luftleitelement 40 und einer gekrümmten Gehäusewand 20 zugeführt, in welchen sich die Lamellen 82 befinden. Entsprechend wird die ausgegebene Luft nach oben hin abgelenkt. Es treten jedoch keine Druckverluste auf, da der Abstand zwischen den vorderen Kanten der ersten Luftleitelemente 90 sowohl bei der Darstellung in Fig. 10 (Neutralstellung) als auch bei der Darstellung in Fig. 11 (Extremstellung) gleichbleibt.

Wie vorstehend bereits ausgeführt, können die ersten Luftleitelemente 90 eine größere Länge aufweisen, sodass in den Maximalstellungen der ersten Luftleitelemente 90 ein Luftstrom in einen der beiden Luftkanäle zwischen den gekrümmten Gehäusewänden 20 und dem zweiten Luftleitelement 40 verhindert oder minimiert wird.

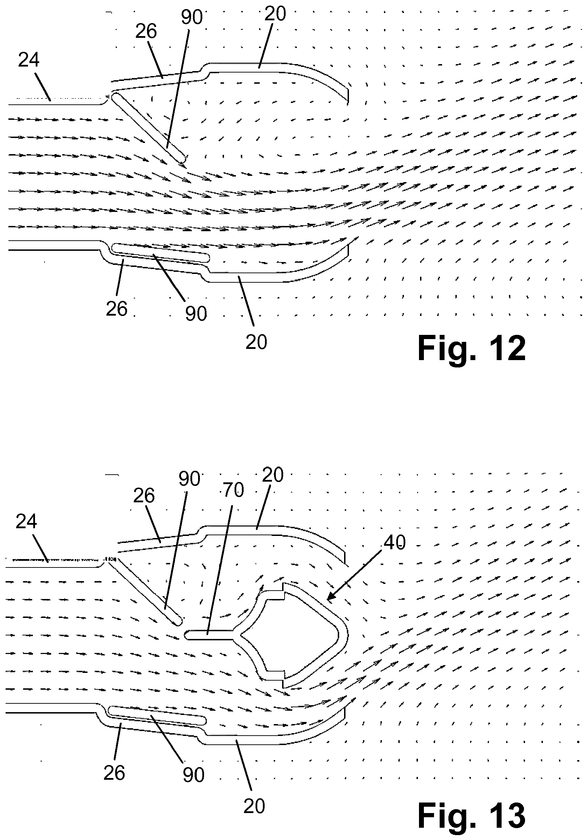

Fig. 12 zeigt eine schematische Schnittansicht eines Luftausströmers 10 einer dritten Ausführungsform mit verschwenkten ersten Luftleitelementen 90. Der Unterschied zu der ersten und zweiten Ausführungsform der Fig. 1 - 11 liegt darin, dass der Luftausströmer 10 der dritten Ausführungsform lediglich zwei erste Luftleitelemente 90 aufweist. Der Luftausströmer 10 weist demnach kein zweites Luftleitelement 40 und kein Leitelement 70 auf. In alternativen Abwandlungen der dritten Ausführungsform kann eine Lamellenanordnung mit mindestens einer Gruppe von vertikal verschwenkbaren Lamellen vorgesehen sein.

Die ersten Luftleitelemente 90 sind wie bei den anderen beiden erstgenannten Ausführungsformen zurückversetzt innerhalb des Gehäuses 18 im Luftkanal 16 angeordnet. Die gegenüberliegenden Gehäusewände 20 sind so ausgebildet, dass diese im Bereich der Luftaustrittsöffnung 14 einander zugewandt sind. Hierdurch kann unter Ausnutzung des Coanda-Effekts eine Luftablenkung erreicht werden. Fig. 12 zeigt einen Zustand, in dem die beiden ersten Luftleitelemente 90 so verschwenkt sind, dass eine Luftablenkung nach oben erfolgt. Hierzu ist das obere erste Luftleitelement 90 soweit verschwenkt, dass die der Luftaustrittsöffnung 14 zugewandte Stirnseite des ersten oberen Luftleitelements 90 im Wesentlichen bis zur Mitte des Luftkanals 16 ragt. Das untere erste Luftleitelement 90 liegt an dem Gehäuseabschnitt 26 an. Einströmende Luft wird daher zu der unteren Gehäusewand 20 geleitet. Die Gehäusewände 20 sind gekrümmt ausgebildet, sodass bei der in Fig. 12 gezeigten Stellung eine Luftablenkung nach oben erfolgt, wie schematisch dargestellt. Eine Luftablenkung nach oben und unten kann daher auch ohne ein zweites Luftleitelement 40 und ohne ein daran angeordnetes Leitelement 70 erfolgen. Eine solche Ausbildung des Luftausströmers 10 ermöglicht eine Luftablenkung mit einer Vorrichtung, die aus wenigen Bestandteilen besteht und daher einfach und kostengünstig ist. Zudem ist die Störungsanfälligkeit sehr gering. Weiterhin können störende Geräusche, beispielsweise durch ein Klappern aufgrund von Vibrationen, fast ausgeschlossen werden. Darüber hinaus bietet der Luftausströmer 10 der dritten Ausführungsform ein ansprechendes Erscheinungsbild, da im Bereich der Luftaustrittsöffnung 14 keine Komponenten angeordnet sind.

Fig. 13 zeigt eine schematische Schnittansicht eines Luftausströmers 10 einer vierten Ausführungsform mit verschwenkten ersten Luftleitelementen 90. Der Luftausströmer 10 der vierten Ausführungsform entspricht im Wesentlichen dem Luftausströmer 10 der ersten Ausführungsform. Die Luftausströmer 10, die in den Fig. 12 - 18 gezeigt sind, weisen zudem Unterschiede in der Ausbildung der Gehäusewände 20 auf. Insbesondere weist der Luftkanal 16 ausgehend von einer Lufteintrittsöffnung 12 einen sich vergrößernden Querschnitt auf. Lediglich im Bereich der Luftaustrittsöffnung 14 erfolgt eine zunehmende Verengung des Luftaustrittsabschnitts aufgrund der gekrümmten gegenüberliegenden Gehäusewände 20.

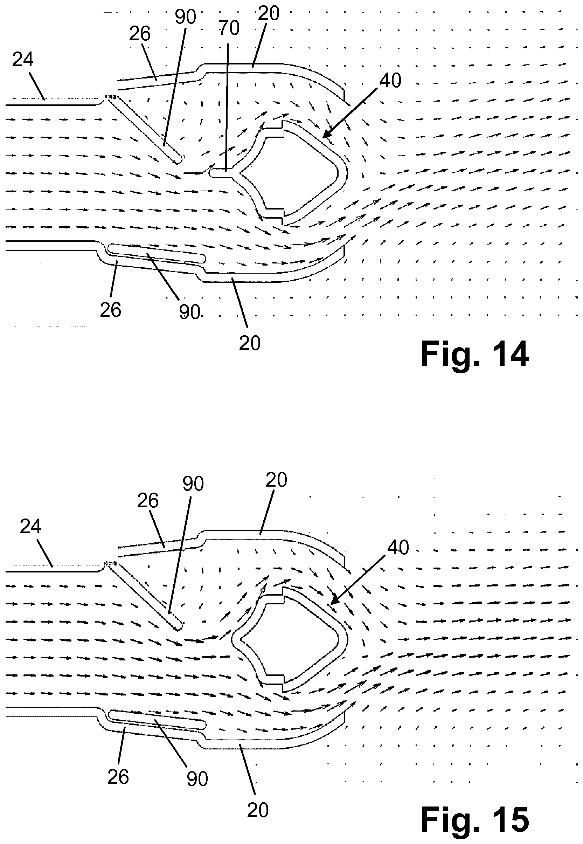

Fig. 14 zeigt eine schematische Schnittansicht eines Luftausströmers 10 einer fünften Ausführungsform mit verschwenkten ersten Luftleitelementen 90. Der Luftausströmer 10 der fünften Ausführungsform unterscheidet sich von dem Luftausströmer 10 der vierten Ausführungsform durch die Ausbildung des Leitelements 70. Bei der fünften Ausführungsform ragt das Leitelement 70 deutlich weniger weit in Richtung der Lufteintrittsrichtung 12 in den Luftkanal 16 als bei der vierten Ausführungsform. Hierüber ergibt sich jedoch keine negative Beeinflussung der Luftablenkung, wie einem Vergleich der Fig. 14 und 13 zu entnehmen ist. Trotz einer größeren Luftzufuhr in einen oberen Abschnitt bei der fünften Ausführungsform erfolgt im Wesentlichen die gleiche Luftablenkung wie bei der vierten Ausführungsform. Die Luftströmung ist in den Figuren mit kleinen Pfeilen dargestellt, wobei die Stärke der Pfeile repräsentativ für die Luftmenge bzw. -stärke ist.

Fig. 15 zeigt eine schematische Schnittansicht eines Luftausströmers 10 einer sechsten Ausführungsform mit verschwenkten Luftleitelementen 90. Die sechste Ausführungsform unterscheidet sich von der vierten und fünften Ausführungsform dadurch, dass an dem zweiten Luftleitelement 40 kein Leitelement 70 angeordnet ist. Hierdurch ergibt sich bei einer Luftablenkung nach oben, wie in Fig. 15 dargestellt, ein größerer Teilluftstrom in den oberen Abschnitt zwischen dem zweiten Luftleitelement 40 und der gegenüberliegenden Gehäusewand 20, dennoch kann eine Luftablenkung in einem ausreichenden Maß bereitgestellt werden.

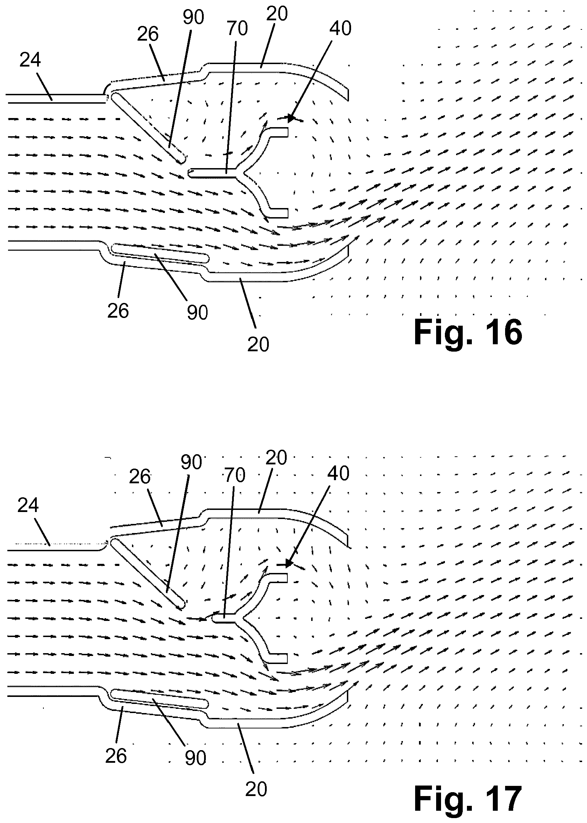

Fig. 16 zeigt eine schematische Schnittansicht eines Luftausströmers 10 einer siebten Ausführungsform mit verschwenkten ersten Luftleitelementen 90. Die siebte Ausführungsform eines Luftausströmers 10 unterscheidet sich von der vierten Ausführungsform durch die Ausbildung des zweiten Luftleitelements 40. Das Luftleitelement 40 der siebten Ausführungsform weist keinen keilförmigen Querschnitt auf. Insbesondere weist das zweite Luftleitelement 40 keine der Luftausströmöffnung 14 zugewandte keilförmige Fläche auf. Dennoch kann eine Luftablenkung in einem tolerierbaren Bereich erzielt werden. Maßgeblich für die Luftablenkung ist neben der Stellung der ersten Luftleitelemente 90 die Krümmung der gegenüberliegenden Gehäusewände 20, die unter Ausnutzung des Coanda-Effekts die Luftablenkung nach oben und unten unterstützen.

Fig. 17 zeigt eine schematische Schnittansicht eines Luftausströmers 10 einer achten Ausführungsform mit verschwenkten ersten Luftleitelementen 90. Die achte Ausführungsform unterscheidet sich von der siebten Ausführungsform eines Luftausströmers 10 darin, dass das Leitelement 70 eine geringere Länge aufweist und nicht soweit in den Luftkanal 16 ragt, wie das Leitelement 70 der siebten Ausführungsform. Dennoch kann eine Luftablenkung erreicht werden, die im Wesentlichen der Luftablenkung der siebten Ausführungsform entspricht.

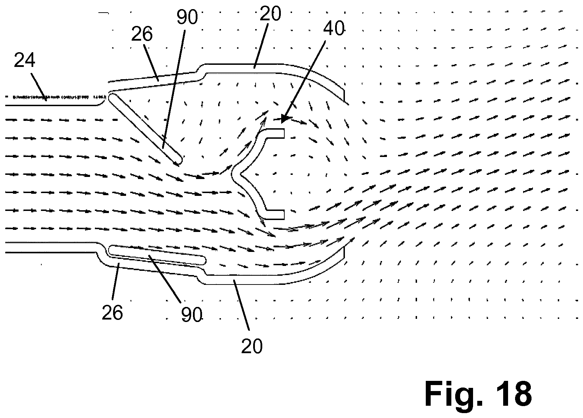

Fig. 18 zeigt schließlich eine schematische Schnittansicht eines Luftausströmers 10 einer neunten Ausführungsform mit verschwenkten ersten Luftleitelementen 90. Die neunte Ausführungsform unterscheidet sich von der siebten und achten Ausführungsform darin, dass an dem zweiten Luftleitelement 40 kein Leitelement 70 angeordnet ist. Analog zu dem Luftausströmer 10 der sechsten Ausführungsform kann auch ohne ein Leitelement 70 eine Luftablenkung erreicht werden, die sich gegenüber Ausführungen mit einem Luftleitelement 70 nur geringfügig unterscheidet.

Bei sämtlichen in den Fig. 1 - 18 gezeigten Ausführungen eines Luftausströmers 10 erfolgt die Luftablenkung in Abhängigkeit der Stellung der ersten Luftleitelemente 90 sowie der Krümmung der gegenüberliegenden Gehäusewände 20. Zudem stellen sich keine großen Druckunterschiede ein, da der Abstand der einander zugewandten und der Luftaustrittsöffnung 14 zugewandten Stirnseiten der ersten Luftleitelemente 90 in sämtlichen Stellungen der ersten Luftleitelemente 90 gleich bleibt.

Die hierin beschriebenen Luftausströmer 10 lösen das Problem der großen Druckverluste und der hohen Strömungsgeschwindigkeiten aus dem Stand der Technik bei als Fugenausströmer bekannten Luftausströmern durch die Bereitstellung eines gleichbleibenden Querschnitts zwischen den vorderen Kanten der ersten Luftleitelemente 90. Zudem befinden sich im Sichtbereich der Luftaustrittsöffnung 14 keine beweglichen Komponenten und die Kinematik zum Verschwenken der ersten Luftleitelemente 90 sowie der Lamellenanordnung ist weniger komplex aufgebaut als bei ähnlichen Luftausströmern aus dem Stand der Technik.

### Bezugszeichenliste

- 10: Luftausströmer
- 12: Lufteintrittsöffnung
- 14: Luftaustrittsöffnung
- 16: Luftkanal
- 18: Gehäuse
- 20: Gehäusewand
- 22: Gehäusewand
- 24: Gehäusewand
- 26: Gehäuseabschnitt
- 28: Gehäuseabschnitt
- 30: Blende
- 32: Wand
- 34: Schließklappe
- 40: zweites Luftleitelement
- 42: erstes Bedienelement
- 44: zweites Bedienelement
- 46: Bedienwelle
- 48: Aufnahme
- 50: Gabel
- 52: Bügel
- 54: Welle
- 56: Koppelzapfen
- 58: Steg
- 60: Kopplungselement
- 62: Verstellelement
- 64: Verbindungswelle
- 70: Leitelement
- 80: Lamelle
- 82: Lamelle
- 90: erstes Luftleitelement
- A: Schwenkachse
- B: Schwenkachse

## Patentansprüche

1. Luftausströmer mit zwei ersten Luftleitelementen (90), die in Luftströmungsrichtung einer Luftaustrittsöffnung (14) und einem vorderen Abschnitt () eines Luftkanals (16) des Luftausströmers (10) vorgelagert sind, wobei
- die ersten Luftleitelemente (90) so angeordnet sind, dass sie den Querschnitt des Luftkanals (16) verkleinern, und
- die Schwenkachsen (A) der ersten Luftleitelemente (90) durch die der Luftaustrittsöffnung (14) abgewandten Stirnseiten der ersten Luftleitelemente (90) verlaufen,
**dadurch gekennzeichnet, dass** der Luftausströmer
- ein zweites Luftleitelement (40) aufweist, welches in dem vorderen Abschnitt des Luftkanals (16) des Luftausströmers (10) angeordnet ist, wobei der vordere Abschnitt gegenüberliegende gekrümmte Gehäusewände (20) aufweist, und
- eine Lamellenanordnung mit einer ersten Gruppe von Lamellen (80) und einer zweiten Gruppe von Lamellen (82) aufweist, wobei die erste Gruppe von Lamellen (80) und die zweite Gruppe von Lamellen (82) jeweils zwischen dem zweiten Luftleitelement (40) und einer gegenüberliegenden Gehäusewand verschwenkbar gelagert sind.

2. Luftausströmer nach Anspruch 1, wobei das zweite Luftleitelement (40) ein verschiebbar und/oder verschwenkbar gelagertes Bedienelement (42; 44) aufweist.

3. Luftausströmer nach Anspruch 2, wobei das Bedienelement (42) mit der ersten Gruppe von Lamellen (80) und der zweiten Gruppe von Lamellen (80) über ein Verstellelement gekoppelt ist.

4. Luftausströmer nach Anspruch 3, wobei
- das Verstellelement (62) parallel zum zweiten Luftleitelement (40) verläuft und eine Vielzahl von Öffnungen aufweist, in welchen Verbindungswellen (64) zwischen der ersten Gruppe von Lamellen (80) und der zweiten Gruppe von Lamellen (80) aufgenommen sind, oder
- das Verstellelement eine Gabel (50) aufweist, die mit einem Paar gegenüberliegender Lamellen (80, 82) der ersten Gruppe von Lamellen (80) und der zweiten Gruppe von Lamellen (82) gekoppelt ist.

5. Luftausströmer nach einem der Ansprüche 2 bis 4, wobei das Bedienelement (42; 44) mit den ersten Luftleitelementen (90) gekoppelt ist.

6. Luftausströmer nach einem der Ansprüche 1 bis 5, wobei das zweite Luftleitelement (40) einen keulenartigen Querschnitt aufweist.

7. Luftausströmer nach einem der Ansprüche 1 bis 6, wobei in dem zweiten Luftleitelement (40) eine Welle drehbar gelagert ist, die mit dem Bedienelement (44) verbunden und mit den ersten Luftleitelementen (90) gekoppelt ist.

8. Luftausströmer nach Anspruch 7, wobei die Welle aus dem Luftkanal (16) herausgeführt und mit den ersten Luftleitelementen (90) außerhalb des Luftkanals (16) gekoppelt ist.

9. Luftausströmer nach einem der Ansprüche 1 bis 8, wobei der Luftkanal (16)
- im Bereich der ersten Luftleitelemente (90) einen Abschnitt mit einem größeren Durchmesser aufweist, oder
- den ersten Luftleitelementen (90) in Luftströmungsrichtung vorgelagert einen Abschnitt mit einem kleineren Durchmesser aufweist, wobei der Querschnitt dieses Abschnitts gegenüber dem Querschnitt des Bereichs reduziert ist, in dem die ersten Luftleitelemente (90) gelagert sind.

10. Luftausströmer nach einem der Ansprüche 1 bis 9, wobei die gegenüberliegenden gekrümmten Gehäusewände (20) konzentrisch zu dem zweiten Luftleitelement (40) angeordnet sind und der Abstand zwischen dem zweiten Luftleitelement (40) und den gegenüberliegenden gekrümmten Gehäusewänden (20) im Wesentlichen gleich groß ist.

11. Luftausströmer nach einem der Ansprüche 1 bis 10, wobei das zweite Luftleitelement (40) ein rückseitiges, der Luftaustrittsöffnung (14) abgewandtes Leitelement (70) aufweist.

## Claims

1. Air vent with two first air guide elements (90) which are upstream of an air outlet opening (14) and a front section of an air channel (16) of the air vent (10) in air flow direction, wherein
- the first air guide elements (19) are so arranged that they reduce the cross-section of the air channel (16) and
- the pivot axes (A) of the first air guide elements (90) run through the ends, which are remote from the air outlet opening (14), of the first air guide elements (90), **characterised in that** the air vent comprises
- a second air guide element (40), which is arranged in the front section of the air channel (16) of the air vent (10), wherein the front section has opposite curved housing walls (20), and
- a slat arrangement with a first group of slats (80) and a second group of slats (82), wherein the first group of slats (80) and the second group of slats (82) are each pivotably mounted between the second air guide element (40) and an opposite housing wall.

2. Air vent according to claim 1, wherein the second air guide element (40) has a displaceably and/or pivotably mounted control element (42; 44).

3. Air vent according to claim 2, wherein the control element (42) is coupled with the first group of slats (80) and the second group of slats (82) by way of an adjusting element.

4. Air vent according to claim 3, wherein
- the adjusting element (62) extends parallel to the second air guide element (40) and has a plurality of openings, in which connecting shafts (64) between the first group of slats (80) and the second group of slats (82) are received, or
- the adjusting element comprises a fork (50), which is coupled with a pair of opposite slats (80, 82) of the first group of slats (80) and the second group of slats (82).

5. Air vent according to any one of claims 2 to 4, wherein the control element (42; 44) is coupled with the first air guide elements (90).

6. Air vent according to any one of claims 1 to 5, wherein the second air guide element (4) has a lobed cross-section.

7. Air vent according to any one of claims 1 to 6, wherein a shaft which is connected with the control element (44) and coupled with the first air guide element (90) is rotatably mounted in the second air guide element (40).

8. Air vent according to claim 7, wherein the shaft is led out of the air channel (16) and is coupled with the first air guide elements (90) outside the air channel (16).

9. Air vent according to any one of claims 1 to 8, wherein the air channel (16)
- has a section with a larger diameter in the region of the first air guide elements (90) or
- has a section with a smaller diameter upstream of the first air guide elements (90) in air flow direction, wherein the cross-section of this section is reduced relative to the cross-section of the region in which the first air guide elements (90) are mounted.

10. Air vent according to any one of claims 1 to 9, wherein the opposite curved housing walls (20) are arranged concentrically with respect to the second air guide element (40) and the spacing between the second air guide element (40) and the opposite curved housing walls (20) is of substantially the same size.

11. Air vent according to any one of claims 1 to 10, wherein the second air guide element (40) has a rear-side guide element (70) remote from the air outlet opening (14).

## Revendications

1. Aérateur avec deux premiers déflecteurs (90), pré stockés dans la direction du flux d'air d'une sortie d'air (14) et dans une section avant d'un conduit d'air (16) de l'aérateur (10),
- les premiers déflecteurs (90) étant disposés de façon à réduire la coupe transversale du conduit d'air (16), et
- les axes de pivotement (A) des premiers déflecteurs (90) passant à travers les faces frontales opposées à la sortie d'air (14) des premiers déflecteurs (90), **caractérisé par le fait que** l'aérateur
- présente un deuxième déflecteur (40) disposé dans la section avant du conduit d'air (16) de l'aérateur (10), la section avant présentant des parois opposées incurvées (20), et
- présente une disposition de lamelles avec un premier groupe de lamelles (80) et un deuxième groupe de lamelles (82), le premier groupe de lamelles (80) et le deuxième groupe de lamelles (82) étant chacun stocké de manière à pouvoir pivoter entre le deuxième déflecteur (40) et une paroi opposée.

2. Aérateur selon la revendication 1, le deuxième déflecteur (40) présentant un élément de commande (42 ; 44) stocké de manière à pouvoir être repoussé et/ou pivoter.

3. Aérateur selon la revendication 2, l'élément de commande (42) étant couplé au premier groupe de lamelles (80) et au deuxième groupe de lamelles (80) via un élément de réglage.

4. Aérateur selon la revendication 3,
- l'élément de réglage (62) étant parallèle au deuxième déflecteur (40) et présentant de nombreuses ouvertures dans lesquelles des arbres d'accouplement (64) sont inclus entre le premier groupe de lamelles (80) et le deuxième groupe de lamelles (80), ou
- l'élément de réglage présente une fourche (50) couplée à une paire de lamelles opposées (80, 82) au premier groupe de lamelles (80) et au deuxième groupe de lamelles (82).

5. Aérateur selon l'une des revendications 2 à 4, l'élément de commande (42 ; 44) étant couplé aux premiers déflecteurs (90) .

6. Aérateur selon l'une des revendications 1 à 5, le deuxième déflecteur (40) présentant une coupe transversale à lobes.

7. Aérateur selon l'une des revendications 1 à 6, un arbre étant stocké dans le deuxième déflecteur (40) de manière à pouvoir tourner et est relié à l'élément de commande (44) et couplé aux premiers déflecteurs (90).

8. Aérateur selon la revendication 7, l'arbre sortant du conduit d'air (16) et étant couplé aux premiers déflecteurs (90) en dehors du conduit d'air (16).

9. Aérateur selon l'une des revendicateurs 1 à 8, le conduit d'air (16)
- présentant dans la zone des premiers déflecteurs (90) une section de diamètre important, ou
- étant pré stocké vis-à-vis des premiers déflecteurs (90) dans la direction du flux d'air, présente une section de diamètre réduit, la coupe transversale de cette section étant réduite par rapport à la coupe transversale de la zone où les premiers déflecteurs (90) sont stockés.

10. Aérateur selon l'une des revendications 1 à 9, les parois incurvées opposées (20) étant disposées concentriquement vis-à-vis du deuxième déflecteur (40) et la distance entre le deuxième déflecteur (40) et les parois incurvées opposées (20) étant en substance égale.

11. Aérateur selon l'une des revendications 1 à 10, le deuxième déflecteur (40) présentant un élément conducteur (70) arrière opposé à la sortie d'air (14).
